# EUROPÄISCHE PATENTANMELDUNG

(11) **EP 0 722 174 A2**
(43) Veröffentlichungstag der Anmeldung: **17.07.1996**
(21) Anmeldenummer: 95810782.3
(22) Anmeldetag: 11.12.1995
(51) Int. Cl.: H01B 9/02

(54) **Elektrisches Bauteil**

(30) Priorität: 13.01.1995 DE 19500849
(71) Anmelder: ABB RESEARCH LTD., CH-8050 Zürich 11 (CH)
(72) Erfinder: Strümpler, Ralf, Dr., CH-5412 Gebenstorf (CH)
(74) Vertreter: Kaiser, Helmut, Dr.

(57) **Zusammenfassung**

Das elektrische Bauteil weist einen mit Hochspannung beaufschlagbaren Stromleiter (2) auf sowie eine an Erdpotential legbare, elektrisch leitende Hülle (1, 5), welche den Stromleiter (2) umfasst und aus welcher der Stromleiter (2) herausgeführt ist. Im Raum zwischen Stromleiter (2) und Hülle (1) ist eine Isolation (3, 4) angeordnet. Es sind ferner Mitteln zum Steuern des an der Isolation (3, 5) wirkenden elektrischen Feldes des Stromleiters (2) vorgesehen. Diese Mittel enthalten dielektrisches Material mit einer bei steigender Temperatur nichtlinear zunehmenden Dielektrizitätskonstante.

Das dielektrische Material ist an Stellen des Bauteils angeordnet, welche der Wirkung starker lokaler elektrischer Felder ausgesetzt sind. An diesen Stellen treten Verluste auf, welche das dielektrische Material lokal beträchtlich erwärmen. Dies bedingt, dass die Dielektrizitätskonstante des Materials in den lokalen Bereichen in nichtlinearer Weise stark anwächst. Dadurch werden die lokalen elektrischen Felder stark reduziert und so eine dielektrische Entlastung des Bauteils erreicht.

## Beschreibung

### TECHNISCHES GEBIET

Bei der Erfindung wird ausgegangen von einem elektrischen Bauteil mit einem mit Hochspannung beaufschlagbaren Stromleiter, einer an Erdpotential legbaren, elektrisch leitenden Hülle, welche den Stromleiter umfasst und aus welcher der Stromleiter herausgeführt ist, einer im Raum zwischen Stromleiter und Hülle angeordneten Isolation und mit Mitteln zum Steuern des an der Isolation wirkenden elektrischen Feldes des Stromleiters. Ein solches Bauteil weist eine oder mehrere Stellen auf, an denen aufgrund der geometrischen Ausbildung des Bauteils das elektrische Feld besonders stark ist. Hohe lokale elektrische Felder werden im allgemeinen durch Steuerelemente abgebaut. Im Bauteil wird so eine homogenere Feldverteilung erreicht.

Das Bauteil kann ein Teil einer gekapselten Anlage oder eines gekapselten Apparates, etwa einer Sammelschiene, eines Schalters, einer Durchführung oder eines Überspannungsableiters einer gasisolierten Schaltanlage, sein. Das Bauteil kann auch ein Kabelende oder ein Teil eines Transformators oder einer rotierenden elektrischen Maschine, etwa ein Roebelstab, sein.

### STAND DER TECHNIK

Ein Bauteil der eingangs genannten Art ist zum Beispiel in DE-A-40 15 929, DE-A-40 07 335 A und DE-A-40 07 337 beschrieben.

Das in DE-A-40 15 929 beschriebene Bauteil ist ein Abschnitt einer metallgekapselten, gasisolierten Hochspannungsanlage, bei der ein im Inneren der Metallkapselung angeordneter, hochspannungsführender Stromleiter über einen Isolator auf der Metallkapselung abgestützt ist. Der Isolator weist sowohl mit dem Stromleiter als auch mit der Metallkapselung kontaktierte Feldsteuerelemente aus elektrisch leitendem Kunststoff auf. Hierdurch werden starke elektrische Felder an den mechanisch stark belasteten Übergangsstellen vom Stromleiter und von der Metallkapselung auf das Isoliermaterial des Isolators vermieden und an Übergangsstellen verlagert, an denen der elektrisch leitende Kunststoff und das Isoliermaterial aneinandergrenzen.

Bei den in DE-A-40 07 335 und DE-A-40 07 337 beschriebenen Bauteilen enthält jeweils ein in eine metallgekapselte, gasisolierte Anlage eingebauter Isolator Ringe oder Scheiben aus einem Material mit hoher Dielektrizitätskonstante. Hierdurch wird bei geeignet bemessener Dielektrizitätskonstante die Grösse des elektrischen Feldes im Isolator vergleichmässigt. Die Herstellung eines solchen Isolator ist relativ aufwendig.

P.N.Nelson und H.C.Hervig "High dielectric constant Materials for primary voltage cable terminations" IEEE Transactions on Power Apparatus and Systems, Vol. PAS-103, No.11, November 1984 beschreiben ein Kabelende, bei dem ein im Bereich der Kabelabschirmung auftretendes hohes elektrisches Feld durch einen Mantel aus einem russgefüllten Polymer vergleichmässigt wird. Das russgefüllte Polymer erhöht bei zunehmendem elektrischem Feld seine Dielektrizitätskonstante und verringert dadurch die Grösse des elektrischen Felds. Der Russgehalt im Polymer darf nicht zu hoch sein, da andernfalls die Verluste im Kabel zu gross werden. Darüber hinaus wird hierdurch die dielektrische Festigkeit herabgesetzt, da die Dielektrizitätskonstante aufgrund der Teilchenstruktur des Russes im allgemeinen nicht isotrop ist.

### KURZE DARSTELLUNG DER ERFINDUNG

Der Erfindung, wie sie in Patentanspruch 1 angegeben ist, liegt die Aufgabe zugrunde, ein Bauteil der eingangs genannten Art anzugeben, welches einfach herstellbar ist, und bei dem die dielektrische Beanspruchung in der Isolation und in den Übergangsbereichen zwischen Isolation und potentialführenden Teilen gering ist.

Das Bauteil nach der Erfindung zeichnet sich dadurch aus, dass durch geeignete Auswahl des Materials der Isolation und/oder eines die Isolation beeinflussenden Steuerelements in einfacher Weise eine Homogenisierung des elektrischen Feldes erreicht und lokale dielektrische Überlastungen des Bauteils vermieden werden. Dadurch werden die Lebensdauer und die Zuverlässigkeit des Bauteils wesentlich erhöht. Diese vorteilhafte Wirkung des Bauteils nach der Erfindung ist darin begründet, dass lokale Überhöhungen des elektrischen Feldes in einer von potentialführenden Teilen umgebenen Isolation lokale Temperaturerhöhung nach sich ziehen. Durch Einsatz eines geeigneten dielektrischen Materials an Stellen der Isolation, an denen bei Verwendung einer konventionellen Isolation unzulässig hohe elektrische Feldstärken und entsprechend hohe Temperaturen auftreten können, oder durch Anordnung dieses Materials auf der Isolation im Bereich hoher elektrischer Feldstärke wird die Temperatur dieses Materials in zulässiger Weise erhöht und wächst hierdurch die Dielektrizitätskonstante des Materials zugleich in nichtlinearer Weise stark an. Dadurch wird das elektrische Feld lokal stark reduziert und eine dielektrische Entlastung des Bauteils erreicht.

Zudem kann ein solches Bauteil mit einfachen Mitteln gefertigt werden und weist gegenüber einem vergleichbar bemessenen Bauteil, bei dem jedoch das elektrische Feld mit einem Material hoher Dielektrizitätskonstante vergleichmässigt wird, geringere Verluste und eine grössere dielektrische Festigkeit auf.

Als Matrix ist im allgemeinen ein Polymer, beispielsweise ein Thermo- und/oder Duroplast und/oder ein Elastomer, vorgesehen. Als Matrix kann gegebenenfalls aber auch anorganisches Material, beispielsweise Glas, Keramik, etwa auf der Basis von ZrO₂, Quarz, Geopolymer und/oder Metall, vorgesehen sein. Die Matrix ist überwiegend aus Feststoffen aufgebaut, kann gegebenenfalls aber auch flüssig sein. Die Matrix ist im allgemeinen passiv, kann aber auch aktiv, d.h. so ausgewählt sein, dass sie in aktiver Weise auf Temperaturänderungen (Polyäthylen), Druck (Elastomere oder mit deformierbaren Teilchen, wie Hohlkugeln, gefüllte Thermoplaste), oder ein elektrisches Feld (piezoelektrische Polymere, wie Polyvinylidenfluord) mit Strukturänderungen reagiert.

Der Füllstoff enthält bevorzugt Teilchen von körniger Gefügestruktur mit mittleren Teilchengrössen von typischerweise bis zu einigen 100 µ, welche entweder durch Zerkleinern einer Sinterkeramik oder eines polykristallinen Halbleiters oder durch Sprühtrocknen einer Suspension oder Lösung und Calcinieren oder Sintern der sprühgetrockneten Teilchen gebildet werden. Diese Teilchen können ferroelektrisch oder antiferroelektrisch sein und sind vor allem Bismutat, Niobat, Scandat, Stannat, Tantalat, Titanat, Zirkonat, Manganit, Rhenit, Tellurit, Wolfram(VI)oxid oder Gallium(VI)oxid, allein oder in Mischung sowie dotiert oder undotiert. Die Teilchen können auch aus dotiertem Metalloxid oder -carbid, wie SiC, TiO₂ oder ZnO, und/oder aus BaTiO₃, SrTiO₃, InSb, GaAs oder Si bestehen.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig. 1: in perspektivischer Ansicht ein als rohrförmiger Abschnitt einer metallgekapselten, gasisolierten Anlage ausgebildetes Bauteil nach der Erfindung mit einer zwischen einem hochspannungsführenden Stromleiter und einer geerdeten Metallkapselung angeordneten, hohlzylinderförmig ausgebildeten Isolation,
- Fig. 2: ein Diagramm, in dem der radiale Verlauf der Temperatur T [°C] im Bauteil gemäss Fig.1 - angegeben in Einheiten des Radius r₁ des Stromleiters - dargestellt ist,
- Fig. 3: ein Diagramm, in dem der radiale Verlauf der in relativen Einheiten angegebenen elektrischen Feldstärke E zwischen dem Stromleiter und der geerdeten Metallkapselung des Bauteils nach Fig.l und eines Bauteils nach dem Stand der Technik - wiederum angegeben in Einheiten des Radius r₁ des Stromleiters - dargestellt ist,
- Fig. 4: ein Diagramm, in dem die Dielektrizitätskonstante ε des im Bauteil gemäss Fig.1 verwendeten dielektrischen Materials in Funktion der Temperatur T [°C] angegeben ist,
- Fig. 5: ein ein Kabelende enthaltendes Bauteil nach der Erfindung, bei dem die dielektrischen Eigenschaften des Kabelendes mit Hilfe von Potentialflächen sichtbar gemacht sind, die von durchgezogenen Linien repräsentiert werden,
- Fig. 6: Diagramme, aus denen jeweils die Grösse des elektrischen Potentials auf der Isolationsaussenfläche des Bauteils gemäss Fig.5 bzw. von Vergleichsbauteilen in Funktion des Abstandes d von der Abschirmung dieses Bauteils bzw. der Vergleichsbauteile ersichtlich ist, und
- Fig. 7: ein Diagramm, in dem die Dielektrizitätskonstante ε des im Bauteil gemäss Fig.5 verwendeten dielektrischen Materials in Funktion der Temperatur T [°C] angegeben ist.

### WEGE ZUR AUSFÜHRUNG DER ERFINDUNG

Das als Abschnitt einer metallgekapselte, gasisolierten Anlage ausgebildete Bauteil gemäss Fig.l weist einen auf der Achse einer rohrförmigen Metallkapselung 1 mit einem Radius r₂ angeordneten hochspannungsführenden Stromleiter 2 mit einem Radius r₁ auf. Die Metallkapselung 1 ist im allgemeinen mit einem Isoliergas, wie beispielsweise SF₆, von typischerweise einigen bar Druck gefüllt. Am Stromleiter kann eine zwischen mehreren kV und bis zu 1000 MV betragende Spannung angelegt werden. Ein von der Metallkapselung 1 gehaltener hohlzylindrischer Isolator 3 stellt die Isolation zwischen der Metallkapselung und dem Stromleiter her.

Der Isolator 3 weist einen Isolatorkörper aus einem gefüllten Polymer auf der Basis von Epoxid auf, in das mit einem Anteil von 10 - 60, vorzugsweise 30, Volumenprozent als Füllstoff BaTiO₃ mit einer mittleren Teilchengrösse von einigen, beispielsweise 2, µm eingemischt ist.

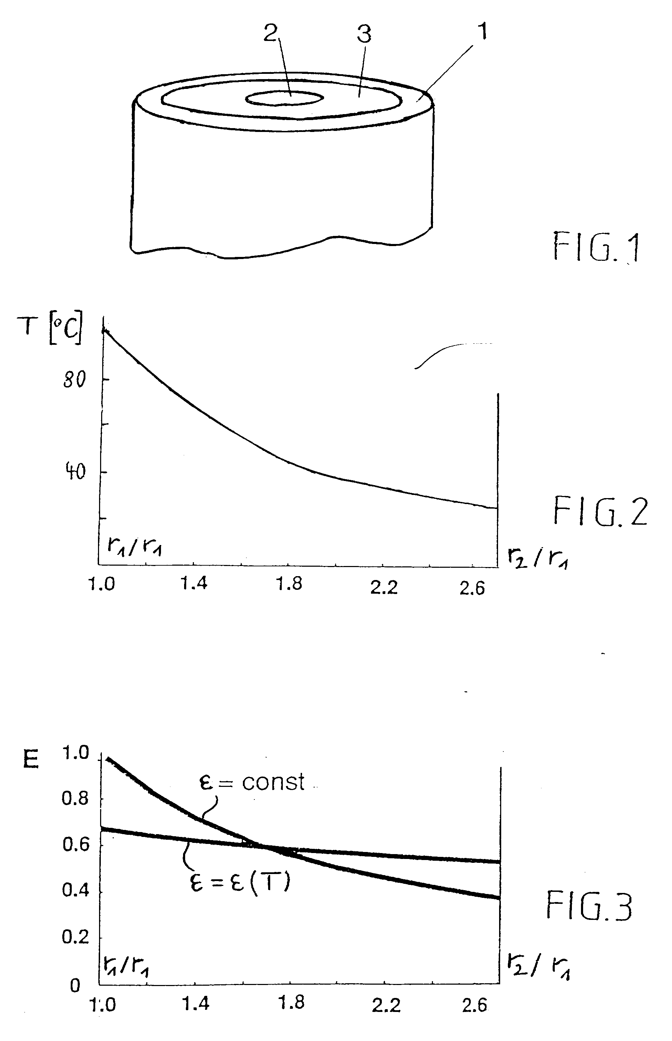

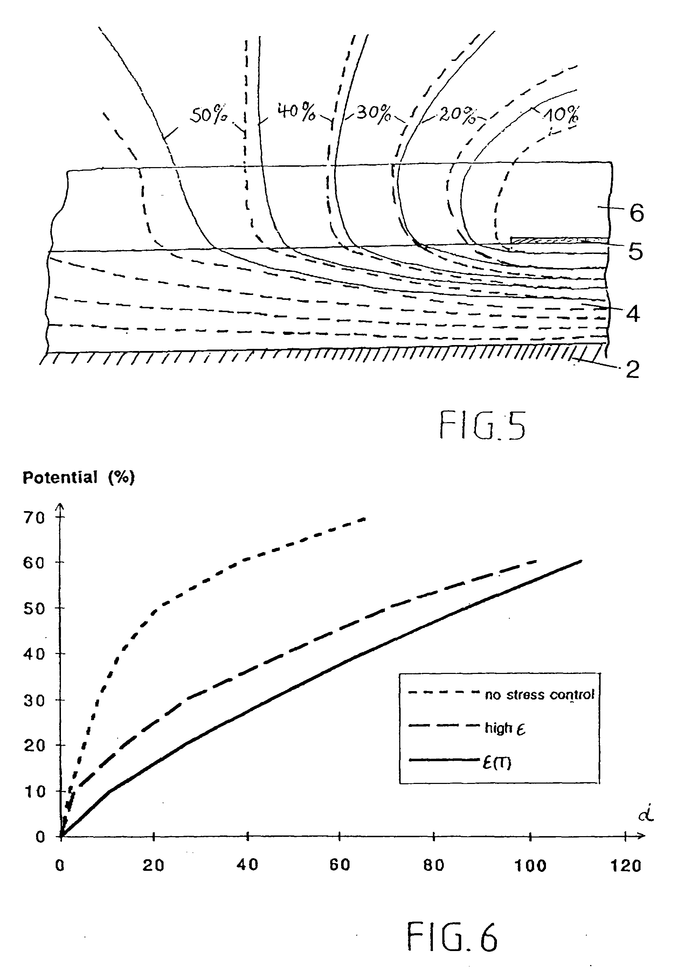

Während des Betriebs des metallgekapselten, gasisolierten Anlage kann sich der Stromleiter 2 aufgrund ohmscher Verluste auf eine maximal zulässige Betriebstemperatur von 105°C erwärmen, wohingegen die Metallkapselung 1 praktisch Umgebungstemperatur beibehält. Der Verlauf der Temperatur T [°C] zwischen dem Stromleiter 2 und der geerdeten Metallkapselung 1 ist in Fig.2 dargestellt. Ersichtlich wird der Isolator 3 im Bereich des Stromleiters 1 (r₁/r₁=1) thermisch am stärksten und im Bereich der Metallkapselung 1 (r₂/r₁) thermisch am geringsten belastet.

Während des Betriebs der Anlage mit einem Bauteil nach dem Stand der Technik, welcher einen Isolator aus einem Polymer auf der Basis von Epoxid und Al₂O₃ als Füllstoff enthält, ist das elektrische Feld E im Bereich des Stromleiters 2 am grössten und verringert sich zur Metallkapselung 1 hin beträchtlich (vgl.Fig.3). Daher sind bei einem Bauteil nach dem Stand der Technik die am Stromleiter 2 gelegenen Bereiche des Isolators 3 thermisch und dielektrisch besonders stark belastet.

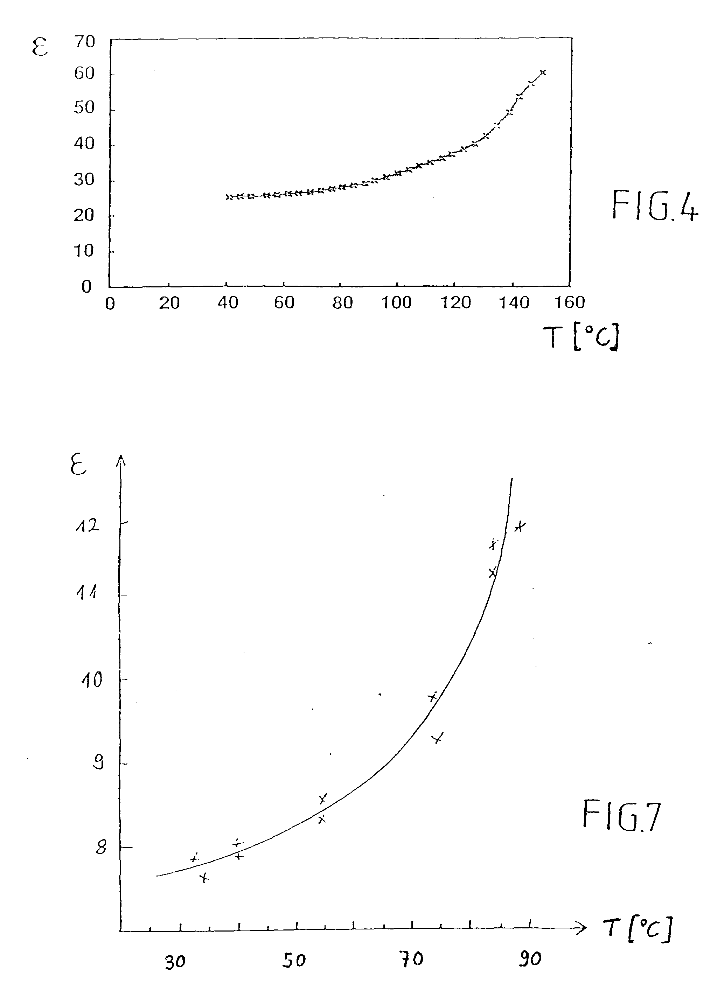

Während des Betriebs der Anlage mit einem Bauteil nach der Erfindung erwärmt sich das dielektrische Material des Isolators 3 im Bereich des Stromleiters 2 am stärksten. Das Material des Isolators ist so gewählt, dass - entsprechend dem Diagramm nach Fig.4 - die Dielektrizitätskonstante ε mit steigender Temperatur nichtlinear zunimmt und bei einer Temperatur von 105°C um mehr als 25% und bei einer Temperatur von 120°C bereits um mehr als 50% grösser ist als bei Raumtemperatur. Daher wird das elektrische Feld vom Stromleiter 2 in den Raum zwischen Stromleiter und Metallkapselung verdrängt. Das elektrische Feld zwischen Stromleiter und Metallkapselung vergleichmässigt sich dadurch erheblich. Übermässige dielektrische Belastungen im thermisch stark belasteten Bereichen des Isolators 3 an den Grenzflächen zu Stromleiter und zu Isoliergas werden so vermieden.

Bei dem in Figur 5 dargestellten Kabelende bezeichnet das Bezugszeichen 2 wiederum den hochspannungsführenden Stromleiter. Dieser Stromleiter ist konzentrisch von einer beispielsweise aus Polyäthylen bestehenden Isolation 4 umgeben, auf deren Mantelfläche eine geerdete, aus Metall oder einem halbleitenden Material bestehende Abschirmung 5 angeordnet ist. Das Kabelende nach Fig.6 weist zusätzlich einen Kabelmantel 6 aus einem gefüllten Polymer auf der Basis von Polyäthlen und von 10 - 50, vorzugsweise 25, Volumenprozent dotiertes ZnO mit mittleren Teilchengrössen kleiner 200 µm, vorzugsweise jedoch zwischen 100 und 200 µm, und mit einer körnigen Gefügestruktur, wie dies etwa für die Herstellung von Varistoren verwendet wird, auf. Das Material des Kabelmantels 6 ist so gewählt, dass - entsprechend dem Diagramm nach Fig.7 - die Dielektrizitätskonstante ε mit steigender Temperatur nichtlinear zunimmt und bei einer Temperatur von 85°C um mehr als 50% grösser ist als bei Raumtemperatur.

Bei Betrieb des Kabels mit grossen Strömen erwärmt sich die Isolation 4 nicht nur aufgrund der ohmschen Verluste zwischen Stromleiter 2 und Abschirmung 5, sondern auch aufgrund von Wechselstromverlusten an Stellen, an denen das elektrische Feld besonders stark ist, wie dem Ende der Abschirmung 5. Aus den in Fig. 5 eingetragenen, durchgezogen dargestellten Potentialflächen ist ersichtlich, dass am Kabelende das elektrische Feld über die Isolation 4 in den Kabelmantel 6 eintritt und mit der Isolation 4 auch den Kabelmantel 6 erwärmt. Entsprechend dem zuvor beschriebenen Ausführungsbeispiel erhöht sich in diesem Bereich die Dielektrizitätskonstante ε des Kabelmantelmaterials mit steigender Temperatur nichtlinear und ist bei einer Temperatur von 85°C um mehr als 50% grösser als bei Raumtemperatur. Daher wird das elektrische Feld mit steigender Temperatur der Isolation 4 und des Kabelmantels 6 zunehmend vom Ende der Abschirmung 5 in die Isolation 4 und den Kabelmantel 6 gedrängt und vergleichmässigt. Übermässige dielektrische Belastungen und thermisch bedingte Durchschläge am Kabelende werden so bei einem thermisch belasteten Kabelende vermieden. Zugleich werden die Verluste erheblich herabgesetzt und hohe Durchschlagspannungen erreicht.

Ist der Kabelmantel 6 hingegen von einem Material mit einer zwar hohen, jedoch temperaturunabhängigen Dielektrizitätskonstante gebildet, so kann bei Raumtemperatur die Feldverteilung am Kabelende zwar vergleichbar oder auch günstiger sein als beim Kabel nach der Erfindung. Erwärmen sich Isolation 4 und Kabelmantel 6, so bleibt das elektrische Feld konstant (in Fig.5 gestrichelt eingezeichnete Potentialflächen) und wird dann die Isolation 4 bei erhöhten Temperaturen dielektrisch genauso stark belastet wie bei Raumtemperatur.

Dieser Sachverhalt ist anhand von Diagrammen in Fig.6 veranschaulicht. In dieser Figur ist die Grösse des elektrischen Potentials auf der Aussenfläche der Isolation 4 in Funktion des Abstandes d von der Abschirmung 5 dargestellt. Die durchgezogene Kurve bezieht sich auf ein Kabel nach der Erfindung und die grob gestrichelt dargestellte Kurve auf ein vergleichbar ausgebildetes Kabel mit einem feldsteuernden Kabelmantel 6 aus einem Material mit hoher, jedoch temperaturunabhängiger Dielektrizitätskonstante. Bei diesen beiden Kabeln ist das Potential in der Grenzschicht zwischen Isolation 4 und Kabelmantel 6 erfasst. Die fein gestrichelt dargestellte Kurve bezieht sich auf ein Kabel ohne einen feldsteuernden Kabelmantel 6, bei der das Potential auf einer nach aussen freien Mantelfläche der Isolation 4 erfasst ist. Aus diesen Diagrammen ist ersichtlich, dass vor allen in der Nähe des Endes der Abschirmung 5 der Potentialanstieg beim Kabel nach der Erfindung weniger steil erfolgt als bei den beiden Vergleichskabeln nach dem Stand der Technik.

### BEZUGSZEICHENLISTE

- 1: Metallkapselung
- 2: Stromleiter
- 3: Isolator
- 4: Isolation
- 5: Abschirmung
- 6: Kabelmantel

## Patentansprüche

1. Elektrisches Bauteil mit einem mit Hochspannung beaufschlagbaren Stromleiter (2), einer an Erdpotential legbaren, elektrisch leitenden Hülle (1, 5), welche den Stromleiter (2) umfasst und aus welcher der Stromleiter (2) herausgeführt ist, einer im Raum zwischen Stromleiter (2) und Hülle (1,5) angeordneten Isolation (3, 4) und mit Mitteln zum Steuern des an der Isolation (3, 4) wirkenden elektrischen Feldes des Stromleiters (2), dadurch gekennzeichnet, dass die Mittel zum Steuern des elektrischen Feldes dielektrisches Material enthalten mit einer mit steigender Temperatur nichtlinear zunehmenden Dielektrizitätskonstante, welches Material der Wirkung des elektrischen Feldes im Bereich hoher elektrischer Feldstärken ausgesetzt ist.

2. Bauteil nach Anspruch 1, dadurch gekennzeichnet, dass das Material ein Verbundwerkstoff auf der Basis eines in eine Polymermatrix eingebetteten Füllstoffs ist.

3. Bauteil nach Anspruch 2, dadurch gekennzeichnet, dass das Polymer ein Duroplast, ein Thermoplast, ein Elastomer, ein Glas oder ein Geopolymer ist.

4. Bauteil nach einem der Ansprüche 2 oder 3, dadurch gekennzeichnet, dass der Füllstoff pulverförmig ist und mit steigender Temperatur die nichtlineare Zunahme der Dielektrizitätskonstante hervorruft.

5. Bauteil nach Anspruch 4, dadurch gekennzeichnet, dass der Füllstoff dotiertes oder undotiertes Bismutat, Niobat, Scandat, Stannat, Tantalat, Titanat, Zirkonat, Manganit, Rhenit oder Tellurit, oder dotiertes Metalloxid oder -carbid für Varistoranwendungen, insbesondere SiC, SnO₂, TiO₂, ZnO, Wolfram(VI)oxid oder Gallium(VI)oxid, allein oder in Mischung enthält.

6. Bauteil nach Anspruch 5, dadurch gekennzeichnet, dass der Verbundwerkstoff eine Matrix auf der Basis eines Epoxids und als Füllstoff ca. 10 - 60 Volumenprozent pulverförmiges BaTiO₃ mit einer Teilchengrösse von einigen µm aufweist oder eine Matrix auf der Basis eines Polyäthylens und als Füllstoff ca. 10 - 50 Volumenprozent dotiertes ZnO mit einer Teilchengrösse kleiner 200 µm.

7. Bauteil nach einem der Ansprüche 1 bis 6 mit einer als Hülle dienenden und mit einem Isoliergas gefüllten Metallkapselung (1), in der der Stromleiter (2) von einem Isolator (3) gehalten ist, dadurch gekennzeichnet, dass das dielektrische Material zumindest einen Teil des zur Halterung des Stromleiters (2) vorgesehenen Isolators (3) bildet.

8. Bauteil nach einem der Ansprüche 1 bis 6 mit einer als Hülle dienenden Abschirmung (5), dadurch gekennzeichnet, dass das dielektrische Material im Bereich des Austritts des Stromleiters (2) aus der Abschirmung (5) mantelförmig auf der Abschirmung (5) und auf dem der Abschirmung (5) anschliessenden Teil der Isolation (4) angeordnet ist.
